# EUROPÄISCHE PATENTSCHRIFT

(11) **EP 1 332 634 B1**
(45) Veröffentlichungstag und Bekanntmachung des Hinweises auf die Patenterteilung: **28.03.2012**
(21) Anmeldenummer: 01989033.4
(22) Anmeldetag: 24.10.2001
(51) Int. Cl.: H04Q 11/04, H04L 12/56, H04L 12/28, H04W 72/04

(54) **VERFAHREN ZUM BETREIBEN EINES MOBILFUNK-KOMMUNIKATIONSSYSTEMS, ENDGERÄT UND FUNKZUGANGSSTELLE FÜR EIN MOBILFUNK-KOMMUNIKATIONSSYSTEM**
METHOD FOR OPERATING A MOBILE RADIO COMMUNICATION SYSTEM, TERMINAL AND RADIO ACCESS FOR A MOBILE RADIO COMMUNICATION SYSTEM
PROCEDE SERVANT A FAIRE FONCTIONNER UN SYSTEME DE COMMUNICATION RADIO MOBILE, TERMINAL ET STATION D'ACCES RADIO POUR SYSTEME DE COMMUNICATION RADIO MOBILE

(30) Priorität: 24.10.2000 DE 10052716
(43) Veröffentlichungstag der Anmeldung: 06.08.2003
(73) Patentinhaber: Nokia Siemens Networks GmbH & Co. KG, 81541 München (DE)
(72) Erfinder: BING, Torsten, 80807 München (DE); BOLINTH, Edgar, 41189 Mönchengladbach (DE); KADELKA, Arndt, 50674 Köln (DE); KRÄMLING, Andreas, 52072 Aachen (DE); LOTT, Matthias, 82061 Neuried (DE); SCHULZ, Egon, 80993 München (DE); WEGMANN, Bernhard, 83607 Holzkirchen (DE)
(86) Internationale Anmeldenummer: PCT/DE2001/004050
(87) Internationale Veröffentlichungsnummer: WO 2002/035864

(56) Entgegenhaltungen:
- WO-A-01/30090
- WO-A-98/12885
- DE-C- 10 008 058
- ETSI: "Broadband Radio Access Networks (BRAN); HIPERLAN Type 2; Data link Control (DLC) layer; Part 2; Radio Link Control (RLC) sublayer" ETSI TS 101 761-2 V1.1.1 (2000-04), April 2000 (2000-04), Seiten 1-186, XP002207979 FRANCE in der Anmeldung erwähnt

## Beschreibung

Die Erfindung betrifft ein Verfahren zum Betreiben eines Mobilfunk-Kommunikationssystems, insbesondere eines Mobilfunk-Kommunikationssystems, bei dem Ressourcen für die Funkübertragung zwischen einem Endgerät und einer Funkzugangsstelle des Systems nicht nach einem fest vorgegebenen zeitlichen Muster, sondern dynamisch in Abhängigkeit vom jeweiligen momentanen Übertragungsbedarf einer Verbindung zugeteilt werden. Dabei soll unter einer Verbindung ein bestehender Kommunikationsweg zwischen einem Endgerät und einer Funkzugangsstelle des Kommunikationssystems verstanden werden, unabhängig davon, ob die auf diesem Weg übertragenen Daten von der Funkzugangsstelle aus an ein anderes Empfänger-Endgerät paketorientiert oder über eine fest geschaltete Verbindung weiter vermittelt werden.

Die Erfindung betrifft ferner ein Endgerät und eine Funkzugangsstelle für ein Mobilfunk-Kommunikationssystem, die für die Durchführung des Verfahrens geeignet sind.

In multizellularen Mobilfunk-Kommunikationssystemen ist es notwendig, dass ein mobiles Endgerät, das sich in einer gegebenen Zelle des Systems aufhält, Messungen an benachbarten Zellen durchführt, z.B. um für ein Handover geeignete Funkzugangsstellen zu ermitteln, oder um innerhalb der Zelle Kanalmessungen durchzuführen, die eine dynamische Wahl der Übertragungsfrequenz zwischen dem Endgerät und der Funkzugangsstelle ermöglichen.

Aus Gründen des Gewichts und des Energieverbrauchs verfügen mobile Endgeräte im allgemeinen nur über eine einzige Sende-/Empfangseinheit. Wenn diese für Messungen benötigt wird, kann sie nicht gleichzeitig für das Endgerät bestimmte Daten von der Funkzugangsstelle empfangen, in deren Zelle sich das Endgerät befindet.

Bei Systemen wie dem bekannten GSM-System werden diese Messungen periodisch durchgeführt. Dies kann ohne Beeinträchtigung der Nutzdatenübertragung geschehen, denn das GSM-System ist ein Zeitmultiplex-System, bei dem einer Verbindung jeweils ein Zeitschlitz innerhalb einer wiederkehrenden, eine Vielzahl solcher Zeitschlitze umfassenden Rahmenstruktur zugeteilt ist. Die Zeit zwischen zwei ihm zugeteilten Zeitschlitzen aufeinanderfolgender Rahmen kann ein Endgerät nutzen, um derartige Messungen durchzuführen.

In Systemen, die ein statistisches Multiplexen von Verbindungsdaten durchführen, wie z.B. in HIPERLAN/2, ist diese feste zeitliche Kanalzuteilung nicht gegeben. Die Funkressourcen werden dynamisch zugeteilt und richten sich nach Datenaufkommen und vereinbarter Dienstgüte. Anders als beim GSM-System gibt es also keine regelmäßig wiederkehrende Zeitspanne von bekannter Dauer, die von einem Endgerät genutzt werden kann, um die benötigten Messungen darin durchzuführen. Wenn das Datenaufkommen einer Verbindung groß ist, und dieser Verbindung ein erheblicher Teil der Funkressourcen einer Funkzugangsstelle zugeteilt wird, so ist die Sendepause zwischen zwei Übertragungszeitintervallen unter Umständen zu klein, um Messungen darin durchführen zu können.

Der HIPERLAN/2-Standard sieht deshalb in seiner derzeitigen Form vor, dass ein mobiles Endgerät sich für eine oder mehrere Messungen von der Funkzugangsstelle abmelden kann und dieser dabei die jeweilige Abwesenheitsdauer, d.h. die Dauer der Zeitspanne, in der es nicht empfangsbereit ist, mitteilt. Dazu wird das Radio Link Control (RLC)-Protokoll der DLC-Schicht verwendet. Die Funkzugangsstelle kann einer solchen Abmeldung zustimmen oder sie ablehnen, sie hat aber keinen Einfluss auf ihre Dauer. Dies bringt für die Funkzugangsstelle erhebliche Probleme bei der Verwaltung des Datenverkehrs mit gegebenenfalls mehreren Endgeräten gleichzeitig mit sich. Für ein Endgerät bestimmte Daten, die an der Funkzugangsstelle eintreffen, während das Endgerät abgemeldet ist, müssen zwischengespeichert werden. Ist die Abwesenheitsdauer zu lang, so kann es zu Speicherüberlastungen kommen, oder es kann zu Übertragungsverzögerungen kommen, die mit einer zwischen Endgerät und Netzzugangsstelle vereinbarten Dienstgüte nicht mehr kompatibel sind. Da die Funkzugangsstelle keine Kenntnis davon hat, wann und in welchem Umfang einzelne Endgeräte Übertragungsunterbrechungen anfordern werden, kann es diese, um die oben erwähnten Fehlfunktionen zu vermeiden, nur restriktiv genehmigen. Wenn diese Genehmigungen aber zu zurückhaltend gegeben werden, so kann dies dazu führen, dass die Funkverbindung zu einem Endgerät abreißt, weil dieses nicht rechtzeitig in der Lage gewesen ist, einen passenden Partner für ein Handover zu finden.

Ein weiteres Problem kann sich ergeben, wenn ein Endgerät unter schwierigen Empfangsbedingungen arbeiten muss, z.B. unter schneller Bewegung oder an einem Ort, wo häufig Signalauslöschungen auftreten. Bei einem solchen Endgerät tritt notwendigerweise häufiger der Bedarf nach Übertragungsunterbrechungen für Messzwecke auf als bei einem stationären Endgerät mit guten Empfangsbedingungen. Im Fall eines solchen Endgeräts mit prekären Empfangsbedingungen kann es sich im Laufe der Verbindung als unmöglich erweisen, die ursprünglich für die Verbindung vereinbarte Dienstqualität aufrecht zu erhalten und gleichzeitig dem Endgerät alle Übertragungsunterbrechungen zu gewähren, die es benötigt. Dies hat zur Folge, dass wertvolle Funkressourcen für eine Verbindung aufgewendet werden, auf der eine befriedigende Kommunikation nicht möglich ist, während möglicherweise andere Endgeräte, die bessere Empfangs- und Sendebedingungen haben, mangels verfügbarer Funkressourcen nicht bedient werden können.

Wie man sieht, ist die Erteilung von Abwesenheitsgenehmigungen durch die Funkzugangsstelle an die einzelnen Endgeräte ein diffiziles Problem, das die Kapazität eines Mobilfunk-Kommunikationssystems beschränken kann.

Aufgabe der Erfindung ist, ein Verfahren zum Betreiben eines Mobilfunk-Kommunikationssystems sowie ein Endgerät und eine Funkzugangsstelle für ein solches System anzugeben, die die Verwaltung der Abwesenheitsgenehmigungen vereinfachen und es ermöglichen, solche Genehmigungen besser an den Bedarf der Endgeräte angepasst zu erteilen.

Diese Aufgabe wird gelöst durch ein Verfahren zum Betreiben eines Mobilfunk-Kommunikationssystems nach Anspruch 1, ein Endgerät nach Anspruch 12 und eine Funkzugangsstelle nach Anspruch 13 oder 14.

Erfindungsgemäß ist vorgesehen, dass ein Endgerät einer ihm zum Zweck der Datenübertragung assoziierten Funkzugangsstelle des Mobilfunk-Kommunikationssystems nicht nur im konkreten Bedarfsfall eine gewünschte Unterbrechung der Datenübertragung ankündigt und während der Unterbrechung die Funkzugangsstelle keine Daten an das Endgerät sendet, sondern dass das Endgerät darüber hinaus, beispielsweise bei der Assoziierung zu der Funkzugangsstelle, einen abgeschätzten voraussichtlichen Bedarf an Übertragungsunterbrechungen an die Funkzugangsstelle meldet.

Dies erlaubt es einer erfindungsgemäßen Funkzugangsstelle z.B., für ein gegebenes Endgerät anhand von dessen gemeldetem voraussichtlichem Unterbrechungsbedarf und der tatsächlich in Anspruch genommenen Unterbrechungen zu prognostizieren, ob dieses Endgerät in Kürze eine erneute Unterbrechung benötigen wird oder empfangsbereit sein wird, und die Zuteilung von Funkressourcen an dieses Endgerät entsprechend zu steuern, so dass, wenn das Endgerät tatsächlich eine Unterbrechung benötigt, diese nicht in einen Zeitraum fällt, der von der Funkzugangsstelle für die Übertragung an das betreffende Endgerät verplant worden ist.

Aus einer Zusammenschau des von den einzelnen Endgeräten gemeldeten voraussichtlichen Unterbrechungsbedarfs kann die Funkzugangsstelle ferner für eine gewisse Zeit im voraus den Bedarf nach Unterbrechungen aller assoziierten Endgeräte und damit das dafür benötigte Puffervolumen abschätzen, und sie braucht erst dann Unterbrechungsgenehmigungen in der herkömmlichen restriktiven Weise zu erteilen, wenn die Prognose ergibt, dass das verfügbare Puffervolumen knapp werden könnte.

Die Meldung des voraussichtlichen Unterbrechungsbedarfs an die Funkzugangsstelle kann eine voraussichtliche Häufigkeit und/oder eine voraussichtliche Dauer der Übertragungsunterbrechungen eines Endgeräts beinhalten. Die Dauer der benötigten Unterbrechungen kann je nach Art der Messungen, die ein Endgerät durchführen muss, unterschiedlich sein. So richtet sich selbstverständlich die Zahl und damit auch die Dauer von Messungen, die an Nachbarzellen durchgeführt werden können oder müssen, nach der Zahl von Funkzugangsstellen der Nachbarzellen, deren Signal für das betreffende Endgerät empfangbar ist. Genauso richtet sich natürlich die Zahl und damit auch die Dauer von Messungen, die an Kanälen der assoziierten Funkzugangsstelle zur Unterstützung der dynamischen Frequenzwahl (Dynamic Frequency Selection, DFS) durchgeführt werden, nach der zur Verfügung stehenden Zahl dieser Kanäle.

Zur Abschätzung des voraussichtlichen Bedarfs an Übertragungsunterbrechungen kann ein Endgerät eine Mehrzahl von Kriterien heranziehen. Ein erstes ist die Bewegungsgeschwindigkeit des Endgeräts. Diese kann z.B. anhand der Häufigkeit von auf einzelnen Übertragungswegen beobachteten Signalauslöschungen grob abgeschätzt werden. Es liegt auf der Hand, dass wenn ein stationäres Endgerät keine solchen Signalauslöschungen beobachtet, Messungen an Nachbarzellen zur Vorbereitung eines Handovers nicht oder allenfalls nur selten erforderlich sein werden, während bei einem schnell bewegten Endgerät häufiger damit zu rechnen ist. Die Qualität des von der Funkzugangsstelle kommend empfangenen Funksignals kann ebenfalls als Indiz für eine bevorstehende Notwendigkeit eines Handovers oder eines dynamischen Frequenzwechsels innerhalb der gleichen Zelle dienen, so dass eine schlechte Empfangsqualität die Anmeldung eines erhöhten Unterbrechungsbedarfs rechtfertigt. Auch die Dienstgüte der zwischen dem Endgerät und der Funkzugangsstelle zu gewährleistenden Verbindung kann einen Einfluss auf den von einem Endgerät gemeldeten Unterbrechungsbedarf haben. Diesen Unterbrechungsbedarf wird man im allgemeinen um so niedriger ansetzen müssen, je höher die Anforderungen an die Dienstgüte, z.B. hinsichtlich der Konstanz der Datenlaufzeit, sind.

Vorzugsweise setzt das Endgerät die Abschätzung des voraussichtlichen Unterbrechungsbedarfs auch nach erfolgter Assoziierung an die Funkzugangsstelle fort, und falls die fortgesetzte Abschätzung zu einer Änderung des abgeschätzten Bedarfs führt, so wird dieser geänderte Bedarf an die Funkzugangsstelle gemeldet. So kann der Möglichkeit Rechnung getragen werden, dass sich z.B. der Bewegungszustand eines Endgerätes bei laufender Verbindung ändert.

Falls der von einem Endgerät gemeldete Unterbrechungsbedarf höher ist als das, was die Funkzugangsstelle unter Berücksichtigung der vom Endgerät angeforderten Dienstgüte und gegebenenfalls des bereits von anderen Endgeräten gemeldeten Unterbrechungsbedarfs zu gewährleisten im Stande ist, kann gemäß einer einfachen Ausgestaltung des Verfahrens vorgesehen werden, dass die Funkzugangsstelle die angeforderte Verbindung abweist. Auf diese Weise wird zuverlässig vermieden, dass Funkressourcen für eine Verbindung aufgewendet werden, die ohnehin absehbar nicht mit der benötigten Qualität bedient werden kann. Dies ermöglicht nicht nur dem Betreiber eines Funk-Kommunikationssystems eine ökonomische Nutzung; es ist auch für den einzelnen Nutzer von Vorteil, der so davor geschützt wird, für eine Verbindung bezahlen zu müssen, auf der letztlich keine brauchbaren Informationen übertragen werden.

Einer weiterentwickelten Ausgestaltung zufolge kann vorgesehen werden, dass wenn die vom Endgerät für eine Verbindung verlangte Dienstgüte nicht gewährleistet werden kann, die Funkzugangsstelle, anstatt die Verbindung abzuweisen, dem Endgerät eine gewährleistbare Dienstgüte mitteilt. In diesem Fall kann am Endgerät, entweder durch den Benutzer oder in einem automatischen Prozess im Endgerät selber, entschieden werden, ob die Verbindung mit der gewährleistbaren Dienstgüte eingerichtet werden soll, oder ob auf den Aufbau der Verbindung verzichtet wird.

Alternativ kann die Funkzugangsstelle in einer solchen Situation dem Endgerät einen gewährbaren Umfang an Übertragungsunterbrechungen mitteilen, so dass anhand dieser Information am Endgerät über die Herstellung oder Nichtherstellung der Verbindung entschieden werden kann.

Weitere Merkmale und Vorteile der Erfindung ergeben sich aus der nachfolgenden Beschreibung eines Ausführungsbeispiels mit Bezug auf die beigefügten Figuren.
- Fig. 1: zeigt schematisch eine Zelle eines Mobilfunk-Kommunikationssystems mit einer Funkzugangsstelle und mehreren assoziierten Endgeräten;
- Fig. 2: veranschaulicht den Ablauf der Signalisierung zwischen mobilem Endgerät und Funkzugangsstelle, mit der der Funkzugangsstelle ein Unterbrechungsbedarf des mobilen Endgeräts gemeldet bzw. zwischen beiden ein gewährbarer Unterbrechungsbedarf ausgehandelt wird.

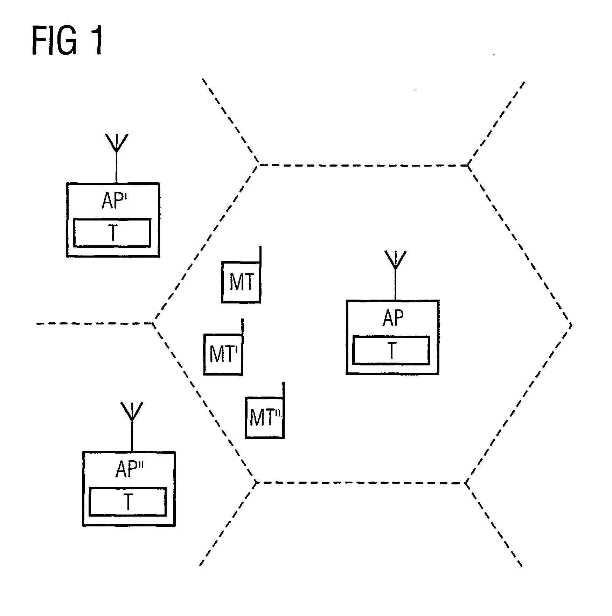

Fig. 1 zeigt stark schematisiert eine Zelle eines erfindungsgemäßen Mobilfunk-Kommunikationssystems, insbesondere eines HIPERLAN/2-Systems, mit einer Funkzugangsstelle AP und einer Mehrzahl von Endgeräten MT, MT', MT", die sich in der Reichweite der Funkzugangsstelle AP aufhalten und mit dieser kommunizieren. Die einzelnen Funkzugangsstellen AP, AP', ... verschiedener Zellen sind miteinander und mit anderen Kommunikationssystemen über Netzknoten verbunden, die in der Fig. nicht gezeigt und nicht Gegenstand der vorliegenden Erfindung sind.

Die Funkzugangsstelle AP verfügt über einen Speicherbaustein mit einer Tabelle T, in der für jedes der Funkzugangsstelle AP assoziierte Endgerät MT, MT', ... ein Eintrag vorhanden ist, der Kontextinformationen einer von dem Endgerät unterhaltenen Verbindung und insbesondere eine Aufzeichnung über den abgeschätzten Bedarf dieses Endgeräts nach zeitweiligen Unterbrechungen der Kommunikation mit der Funkzugangsstelle AP enthält, die notwendig sind, damit das Endgerät Messungen an Funksignalen von benachbarten Funkzugangsstellen AP', AP" durchführen kann.

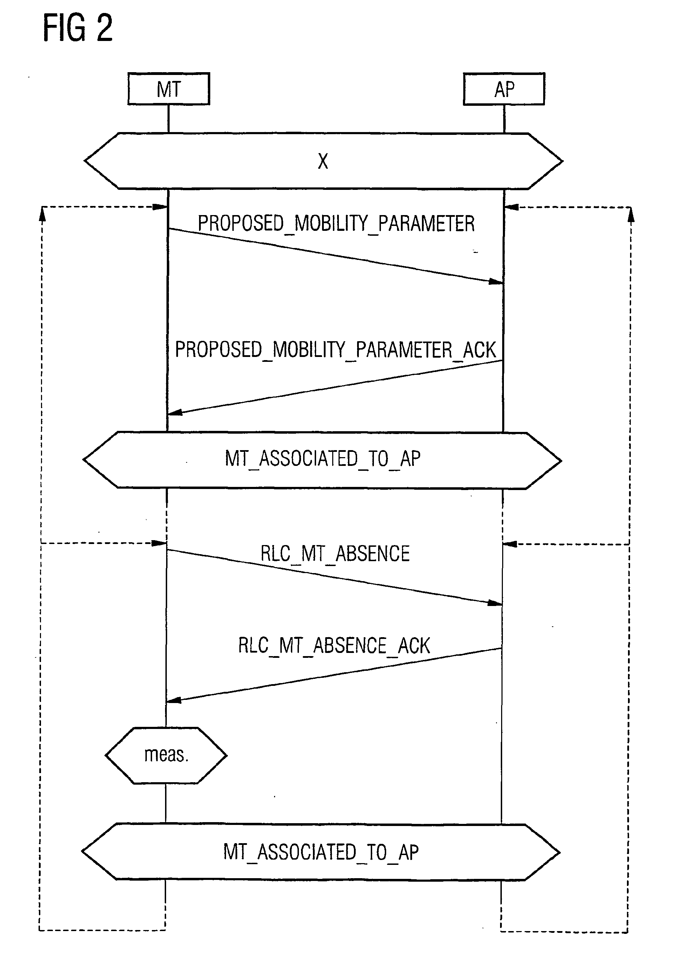

Fig. 2 zeigt in zeitlicher Folge, von oben nach unten, Zustände, in denen sich ein Endgerät MT und eine Netzzugangsstelle, z.B. ein sogenannter Access Point AP eines HIPERLAN/2 Mobilfunk-Kommunikationssystems befinden können. Der mit x beschriftete Kasten kann für einen Prozess des Einbuchens des Endgeräts MT in das Mobilfunk-Kommunikationssystems, für einen Prozess des Aufbauens einer Übertragungsverbindung zwischen dem Endgerät MT und der Funkzugangsstelle AP stehen.

Zunächst wird angenommen, dass der Kasten x für einen Prozess des Einrichtens einer Übertragungsverbindung zwischen dem Endgerät MT und der Funkzugangsstelle AP steht. Wenn das Endgerät MT eine Übertragungsverbindung von der Funkzugangsstelle AP anfordert, oder die Funkzugangsstelle AP aufgrund eines auswärtigen Anrufs eine Verbindung zum Endgerät MT aufzubauen versucht, ist das Endgerät MT zuvor meist schon eine gewisse Zeitspanne lang in Betrieb gewesen, und es hat in dieser Zeitspanne die Qualität der von der Funkzugangsstelle AP empfangenen Signale und gegebenenfalls am Fluktuationsverhalten dieser Signale seine eigene Bewegungsgeschwindigkeit abschätzen können. Anhand dieser Informationen ist eine Abschätzung darüber möglich, mit welcher Häufigkeit welche Messungen an Funksignalen der Funkzugangsstelle AP oder von Funkzugangsstellen benachbarter Zellen erforderlich sind, um in dem Fall, dass sich ein Handover zu einer Nachbarzelle oder ein Wechsel auf eine andere von der Funkzugangsstelle AP unterstützte Signalfrequenz als notwendig erweist, diese schnell genug durchführen zu können.

Das Endgerät MT erzeugt eine hier als "PROPOSED_ABSENCE_PARAMETER" bezeichnete Meldung, mit der es diesen abgeschätzten Unterbrechungsbedarf der Funkzugangsstelle AP signalisiert. Eine für die Funkübertragung benötigte Dienstgüte ist der Funkzugangsstelle AP bekannt, weil sie im Rahmen des Verbindungsaufbauprozesses von dem die Verbindung einleitenden Endgerät, entweder dem hier betrachteten Endgerät MT oder einem nicht dargestellten externen Endgerät, übermittelt worden ist. Die Funkzugangsstelle AP vergleicht den in der Meldung "PROPOSED_ABSENCE_PARAMETER" gemeldeten Unterbrechungsbedarf mit einem für die geforderte Dienstqualität der Verbindung vorgegebenen Grenzwert. Falls dieser Grenzwert unterschritten wird, kann noch ein Abgleich mit einer Rest-Unterbrechungskapazität der Funkzugangsstelle AP durchgeführt werden, wobei unter dieser Rest-Unterbrechungskapazität ein restliches Fassungsvermögen von Datenpuffern der Funkzugangsstelle zu verstehen ist, welches noch nicht für die Pufferung im Falle von Unterbrechungen bereits bestehender Übertragungsverbindungen von der Funkzugangsstelle verplant ist. Sofern auch diese - Restunterbrechungskapazität nicht überschritten wird, kann dem Endgerät in einer als "PROPOSED_ABSENCE_PARAMETER_ACK" bezeichneten Meldung bestätigt werden, dass der angemeldete Unterbrechungsbedarf akzeptiert ist, d.h., dass die Funkzugangsstelle AP voraussichtlich in der Lage sein wird, für das Endgerät MT eintreffende Daten zu puffern, wenn dieses eine Unterbrechung benötigt.

Wenn die Funkzugangsstelle AP die Meldung "PROPOSED_ABSENCE_-PARAMETER_ACK" sendet, so speichert sie auch den von dem Endgerät MT gemeldeten Unterbrechungsbedarf in der Tabelle T.

Die Meldung "PROPOSED_ABSENCE_PARAMETER" beinhaltet selbst noch keine Anforderung einer Empfangsunterbrechung, und die auf diese Meldung an das Endgerät MT zurückgesendete Meldung "PROPOSED_ABSENCE_PARAMETER_ACK" beinhaltet noch keine Genehmigung einer Empfangsunterbrechung.

Wenn die Meldung des Übertragungsbedarfs in dieser Weise von der Funkzugangsstelle AP akzeptiert worden ist, geht das Endgerät MT in einen Zustand der Assoziierung zu der Funkzugangsstelle AP über, in der Nutzdaten der angeforderten Verbindung zwischen beiden übertragen werden können. Dieser Zustand ist in Fig. 2 durch einen mit "MT_ASSOCIATED_TO_AP" beschrifteten Kasten symbolisiert.

Falls die Funkzugangsstelle AP nicht in der Lage ist, den vom Endgerät MT angeforderten Unterbrechungsbedarf zuzusagen, sei es, weil ihre Pufferkapazitäten ausgelastet sind oder weil der angeforderte Unterbrechungsbedarf nicht mit der für die gewünschte Verbindung benötigten Dienstgüte kompatibel ist, so kann dies dem Endgerät MT mit einer Meldung "PROPOSED_ABSENCE_PARAMETER_ACK" signalisiert werden, in der nicht die in der ursprünglichen Bedarfsmeldung enthaltenen Werte für die voraussichtliche Häufigkeit und Dauer der Unterbrechungen wiederholt sind, sondern andere, niedrigere Werte vorgeschlagen werden. An der Abweichung zwischen Anforderung und Bestätigung erkennt das Endgerät MT, dass die benötigte Verbindung nicht in allen Einzelheiten in der gewünschten Form und Qualität bereitgestellt werden kann.

Die technisch einfachste Lösung ist, daß das Endgerät MT in einem solchen Fall den Verbindungsaufbau abbricht. Vorteilhafter ist es jedoch, in einem solchen Fall zu prüfen, ob die von der Funkzugangsstelle AP angebotenen Werte für Häufigkeit und Dauer der Messungen den Betrieb eines Typs von Verbindung erlauben, der als ein Ersatz für den ursprünglich angeforderten Verbindungstyp dienen kann. Z.B. kann anstelle einer gewünschten Sprachübertragung eine Sprachübertragung mit reduzierter Bandbreite angeboten werden, oder dergleichen. Dann kann das Endgerät MT entscheiden, dass die Verbindung mit dem angebotenen Typ hergestellt wird. Wenn keine Möglichkeit einer alternativen Verbindung besteht, wird der versuchte Verbindungsaufbau abgebrochen.

Als Variante des oben beschriebenen Verfahrens kann vorgesehen werden, dass bereits das Endgerät MT beim Melden des abgeschätzten Unterbrechungsbedarfs die Dienstgüte berücksichtigt, die für die herzustellende Verbindung benötigt wird, und Unterbrechungsbedarf nur in dem Umfang bei der Funkzugangsstelle anmeldet, wie dieser mit der gewünschten Dienstqualität kompatibel ist. Diese Variante zeichnet sich durch einen relativ geringen Signalisierungsbedarf aus, da ein Endgerät, wenn es eine Inkompatibilität seines Unterbrechungsbedarfs mit einer gewünschten Dienstqualität erkennt, bereits auf die Absendung einer Meldung "PROPOSED_ABSENCE_PARAMETER" verzichten und den Verbindungsabbau in einer frühen Stufe abbrechen kann oder von vornherein nur den Aufbau einer Verbindung anfordert, deren Typ mit dem festgestellten Unterbrechungsbedarf kompatibel ist. Die zuerst beschriebene Variante, bei der die Funkzugangsstelle über die Kompatibilität des Unterbrechungsbedarfs mit der gewünschten Dienstqualität entscheidet, hat demgegenüber den Vorteil, dass die Endgeräte einfacher sein können, da sie lediglich ihren Unterbrechungsbedarf anhand ihrer Empfangsbedingungen abschätzen müssen und eine Entscheidung darüber, ob dieser Unterbrechungsbedarf befriedigt werden kann oder nicht, zentralisiert an der Funkzugangsstelle für eine Vielzahl von Endgeräten stattfindet.

Wenn die Funkzugangsstelle AP den vom Endgerät MT angemeldeten Unterbrechungsbedarf akzeptiert hat oder das Endgerät MT den von der Funkzugangsstelle AP angebotenen Unterbrechungsumfang, so kann in dem sich anschließenden Zustand der Assoziierung des Endgeräts zur Funkzugangsstelle der Übertragungsbetrieb aufgenommen werden. Im Laufe dieses Betriebs signalisiert das Endgerät MT jeweils nach Bedarf der Funkzugangsstelle AP tatsächlichen Unterbrechungsbedarf mit einer Meldung "RLC_MT_ABSENCE". Diese Meldung kann, wie aus dem ETSI-Standard "Broadband Radio Access Networks (BRAN), HIPERLAN/2, Data Link Control (DLC) Layer; Part 2: Radio Link Control (RLC) Sublayer", Standard TS 101 761-2, vom April 2000 bekannt, als Parameter die jeweils im Einzelfall von dem Endgerät MT benötigte Abwesenheitszeit enthalten. Dies ist zweckmäßig, wenn das Endgerät von Zeit zu Zeit wechselnde Meßaufgaben zu erledigen hat, deren Zeitdauer von Fall zu Fall variiert. Alternativ kann aber auch vorgesehen werden, dass das Endgerät jeweils immer nur Phasen von der bei der Anmeldung des Unterbrechungsbedarfs festgelegten Dauer anfordern darf. In diesem Fall braucht die Unterbrechungsdauer in der Anforderung einer Unterbrechung nicht mehr übertragen zu werden.

Die Funkzugangsstelle antwortet mit einer Bestätigung "RLC_MT_ABSENCE_ACK", wenn die Empfangsunterbrechung genehmigt werden kann, woraufhin das Endgerät während der vereinbarten Zeitspanne die benötigten Messungen durchführt. Dieser Schritt ist in Fig. 2 durch das Kästchen "meas." dargestellt. Nach Ablauf der Zeitspanne kehrt das Endgerät MT in den Zustand der Empfangsbereitschaft zurück, ohne dass hierfür weitere Signalisierungsmeldungen zwischen Endgerät und Funkzugangsstelle ausgetauscht werden müssten, und die Funkzugangsstelle AP nimmt, ebenfalls nach Ablauf der vereinbarten Unterbrechungsdauer, den Übertragungsbetrieb an das Endgerät wieder auf. Dieser Zustand ist wiederum als Kästchen mit Beschriftung "MT_ASSOCIATED_TO_AP" dargestellt.

Wie in Fig. 2 durch strichpunktierte Pfeile angedeutet, wiederholt sich dieser Prozess zyklisch. Innerhalb größerer Zeitintervalle wird auch der Austausch der Meldungen "PROPOSED_ABSENCE_PARAMETER" und "PROPOSED_ABSENCE_PARAMETER_ACK" wiederholt. Diese Wiederholung kann turnusmäßig innerhalb festgelegter Zeitabstände erfolgen; bevorzugt ist allerdings, dass das Endgerät MT zwar seine Empfangsbedingungen und den daraus resultierenden Unterbrechungsbedarf fortlaufend überwacht, eine Meldung "PROPOSED_ABSENCE_PARAMETER" jedoch nur dann absendet, wenn diese Überwachung einen veränderten Unterbrechungsbedarf ergeben hat.

Bei der oben gegebenen Beschreibung wurde davon ausgegangen, dass das Endgerät MT bereits in dem Moment, wo der Aufbau einer Verbindung begonnen wird, über die notwendigen Informationen über seine Empfangsqualität verfügt, die es ihm ermöglichen, seinen Unterbrechungsbedarf abzuschätzen. Um den Energieverbrauch des Endgeräts im Bereitschaftszustand gering zu halten, kann allerdings vorgesehen werden, dass die hierfür notwendigen Messungen erst mit Beginn des Aufbaus einer Verbindung begonnen werden, so dass zu Beginn des Verbindungsaufbaus noch keine brauchbare Abschätzung zur Verfügung steht. Da die Verfügbarkeit einer solchen Abschätzung aber keine Voraussetzung für eine erfolgreiche Kommunikation zwischen Endgerät MT und Funkzugangsstelle AP ist, kann vorgesehen werden, dass die Meldung "PROPOSED_ABSENCE_PARAMETER" erst dann abgeschickt wird, wenn das Endgerät MT in der Lage ist, seine Empfangsqualität zu beurteilen, und dass die Funkzugangsstelle bis zum Eintreffen dieser Meldung einen Standardwert des Unterbrechungsbedarfs zugrundelegt. Diesen Standardwert kann die Funkzugangsstelle selbsttätig festlegen. Alternativ kann das Endgerät einen solchen Standardwert des Unterberechungsbedarfs an die Funkzugangsstelle melden.

Dieser Standardwert wird zweckmäßigerweise in Abhängigkeit von einer gewünschten Dienstqualität aus einer Mehrzahl vorgegebener Werte gewählt. Dabei muss diese Auswahl natürlich jeweils von demjenigen Gerät vorgenommen werden, dass die gewünschte Dienstqualität kennt, d. h. im Falle eines von der Funkzugangsstelle ausgehenden Verbindungsaufbaus bestimmt dies den Standardwert, im entgegengesetzten Fall ist es das Endgerät.

Sobald das Endgerät in der Lage ist, seinen Unterbrechungsbedarf anhand einer Beurteilung seiner Empfangsqualität abzuschätzen, meldet es diesen der Funkzugangsstelle AP im Rahmen einer aktualisierten "RLC_MOBILITY_PARAMETER"-Meldung.

## Patentansprüche

1. Verfahren zum Betreiben eines Mobilfunk-Kommunikationssystems, bei dem ein Endgerät (MT) einer ihm zum Zweck der Datenübertragung assoziierten Funkzugangsstelle (AP) des Mobilfunk-Kommunikationssystems eine gewünschte Unterbrechung der Datenübertragung ankündigt, damit während der Unterbrechung die Funkzugangsstelle (AP) keine Daten an das Endgerät (MT) sendet, **dadurch gekennzeichnet, dass** das Endgerät einen abgeschätzten voraussichtlichen Bedarf an Übertragungsunterbrechungen an die Funkzugangsstelle meldet.

2. Verfahren nach Anspruch 1, **dadurch gekennzeichnet, dass** das Endgerät (MT) an die Funkzugangsstelle (AP) eine voraussichtliche Häufigkeit und/ oder eine voraussichtliche Dauer der Übertragungsunterbrechungen meldet.

3. Verfahren nach einem der vorhergehenden Ansprüche, **dadurch gekennzeichnet, dass** das Endgerät (MT) den voraussichtlichen Bedarf an Unterbrechungen anhand eines oder mehrerer der folgenden Kriterien abschätzt:
- Bewegungsgeschwindigkeit des Endgeräts,
- Qualität eines von der Funkzugangsstelle kommend empfangenen Funksignals,
- Dienstgüte der Datenübertragung,
- Sendeleistung von Endgerät (MT) und Funkzugangsstelle (AP).

4. Verfahren nach einem der vorhergehenden Ansprüche, **dadurch gekennzeichnet, dass** das Endgerät bei der Assoziierung zu der Funkzugangsstelle den abgeschätzten voraussichtlichen Bedarf an Übertragungsunterbrechungen an die Funkzugangsstelle meldet.

5. Verfahren nach Anspruch 4, **dadurch gekennzeichnet, dass** das Endgerät (MT) die Abschätzung des voraussichtlichen Bedarfs nach erfolgter Assoziierung fortsetzt und im Falle einer Änderung des abgeschätzten Bedarfs den geänderten Bedarf an die Funkzugangsstelle (AP) meldet.

6. Verfahren nach Anspruch 4 oder 5, **dadurch gekennzeichnet, dass** die Funkzugangsstelle (AP) eine Verbindungsanforderung des Endgeräts abweist, wenn eine vom Endgerät (MT) für die Verbindung verlangte Dienstgüte in Verbindung mit dem von dem Endgerät (MT) gemeldeten voraussichtlichen Bedarf an Übertragungsunterbrechungen nicht gewährleistet werden kann.

7. Verfahren nach einem der Ansprüche 4 oder 5, **dadurch gekennzeichnet, dass** wenn eine vom Endgerät (MT) für eine Verbindung verlangte Dienstgüte in Verbindung mit dem von dem Endgerät gemeldeten voraussichtlichen Bedarf an Übertragungsunterbrechungen nicht gewährleistet werden kann, die Funkzugangsstelle (AP) dem Endgerät (MT) eine gewährleistbare Dienstgüte mitteilt.

8. Verfahren nach Anspruch 7, **dadurch gekennzeichnet, dass** am Endgerät entschieden wird, ob die Verbindung mit der gewährleistbaren Dienstgüte eingerichtet oder ob die Verbindung nicht aufgebaut werden soll.

9. Verfahren nach einem der Ansprüche 4 oder 5, **dadurch gekennzeichnet, dass** wenn eine vom Endgerät (MT) für eine Verbindung verlangte Dienstgüte in Verbindung mit dem von dem Endgerät (MT) gemeldeten voraussichtlichen Bedarf an Übertragungsunterbrechungen nicht gewährleistet werden kann, die Funkzugangsstelle (AP) dem Endgerät (MT) einen gewährbaren Umfang an Übertragungsunterbrechungen mitteilt.

10. Verfahren nach Anspruch 9, **dadurch gekennzeichnet, dass** am Endgerät entschieden wird, ob die Verbindung mit dem gewährbaren Umfang an Übertragungsunterbrechungen eingerichtet oder ob die Verbindung nicht aufgebaut werden soll.

11. Verfahren nach einem der vorhergehenden Ansprüche, **dadurch gekennzeichnet, dass** das Mobilfunk-Kommunikationssystem ein HIPERLAN/2-System ist.

12. Endgerät (MT) für ein Mobilfunk-Kommunikationssystem, welches eingerichtet ist, in einem Zustand, in dem es einer Funkzugangsstelle (AP) des Mobilfunk-Kommunikationssystems zum Zweck der Datenübertragung assoziiert ist, die Übertragung von/zu der assoziierten Funkzugangsstelle (AP) zeitweilig zu unterbrechen, um Messungen an den Signalen anderer Funkzugangsstellen durchzuführen, **dadurch gekennzeichnet, dass** das Endgerät (MT) ferner eingerichtet ist, einen abgeschätzten voraussichtlichen Bedarf an Übertragungsunterbrechungen an die Funkzugangsstelle (AP) zu melden.

13. Funkzugangsstelle (AP) für ein Mobilfunk-Kommunikationssystem, welche eingerichtet ist, die Übertragung von Daten von/zu einem assoziierten Endgerät (MT) bei Empfang einer Unterbrechungsanforderung von dem Endgerät zeitweilig zu unterbrechen, **dadurch gekennzeichnet, dass** es ferner eingerichtet ist, eine Meldung über einen abgeschätzten voraussichtlichen Bedarf an Übertragungsunterbrechungen von dem Endgerät zu empfangen und in Abhängigkeit von diesem gemeldeten Bedarf eine Verbindung zu dem Endgerät zu akzeptieren, abzuweisen oder eine Verbindung mit einer anderen als der vom Endgerät verlangten Dienstgüte anzubieten.

14. Funkzugangsstelle (AP) für ein Mobilfunk-Kommunikationssystem, welche eingerichtet ist, bei Empfang einer Anforderung von einem Endgerät (MT) nach einer zeitweiligen Unterbrechung der Übertragung der Datenübertragung die Unterbrechung zu gewähren oder zu verweigern, **dadurch gekennzeichnet, dass** die Funkzugangsstelle ferner eingerichtet ist, bei einer Entscheidung über die Gewährung oder Verweigerung einer Unterbrechung einen von ihr alsoziierten Teilnehmerstationen abgeschätzten voraussichtlichen Bedarf an Übertragungsunterbrechungen zu berücksichtigen.

## Claims

1. Method for operating a mobile radio communication system in which a terminal (MT) of a radio access point (AP), associated with it for the purpose of data transmission, of the mobile radio communication system announces a desired interruption of the data transmission so that the radio access point (AP) does not transmit any data to the terminal (MT) during the interruption, **characterized in that** the terminal reports an estimated anticipated requirement for transmission interruptions to the radio access point.

2. Method according to Claim 1, **characterized in that** the terminal (MT) reports to the radio access point (AP) an anticipated frequency and/or an anticipated duration of the transmission interruptions.

3. Method according to one of the preceding claims, **characterized in that** the terminal (MT) estimates the anticipated requirement for interruptions by means of one or more of the following criteria:
- speed of movement of the terminal,
- quality of a radio signal received coming from the radio access point,
- quality of service of the data transmission,
- transmitting power of terminal (MT) and radio access point (AP).

4. Method according to one of the preceding claims, **characterized in that** the terminal reports the estimated anticipated requirement for transmission interruptions to the radio access point during the association with the radio access point.

5. Method according to Claim 4, **characterized in that** the terminal (MT) continues the estimation of the anticipated requirement after completed association and, in the case of a change in the estimated requirement, reports the changed requirement to the radio access point (AP).

6. Method according to Claim 4 or 5, **characterized in that** the radio access point (AP) rejects a connection request of the terminal if a quality of service, demanded by the terminal (MT) for the connection, cannot be guaranteed in connection with the anticipated requirement for transmission interruptions that is reported by the terminal (MT).

7. Method according to either of Claims 4 and 5, **characterized in that** if a quality of service, demanded by the terminal (MT) for a connection, cannot be guaranteed in connection with the anticipated requirement for transmission interruptions that is reported by the terminal, the radio access point (AP) informs the terminal (MT) of a guaranteeable quality of service.

8. Method according to Claim 7, **characterized in that** it is decided at the terminal whether the connection is to be set up with the guaranteeable quality of service or whether the connection is not to be set up.

9. Method according to either of Claims 4 and 5, **characterized in that** if a quality of service demanded by the terminal (MT) for a connection cannot be guaranteed in connection with the anticipated requirement for transmission interruptions that is reported by the terminal (MT), the radio access point (AP) informs the terminal (MT) of a grantable extent of transmission interruptions.

10. Method according to Claim 9, **characterized in that** it is decided at the terminal whether the connection with the grantable extent of transmission interruptions is to be set up or whether the connection is not to be set up.

11. Method according to one of the preceding claims, **characterized in that** the mobile radio communication system is a HIPERLAN/2 system.

12. Terminal (MT) for a mobile radio communication system, which is arranged, in a state in which it is associated with a radio access point (AP) of the mobile radio communication system for the purpose of data transmission, temporarily to interrupt the transmission from/to the associated radio access point (AP) in order to perform measurements on the signals of other radio access points, **characterized in that** the terminal (MT) is also arranged to report an estimated anticipated requirement for transmission interruptions to the radio access point (AP).

13. Radio access point (AP) for a mobile radio communication system, which is arranged for temporarily interrupting the transmission of data from/to an associated terminal (MT) on reception of an interruption request from the terminal, **characterized in that** it is also arranged to receive a message about an estimated anticipated requirement for transmission interruptions from the terminal, and, in dependence on this reported requirement, accepting, rejecting or offering a connection having another quality of service than that demanded by the terminal.

14. Radio access point (AP) for a mobile radio communication system, which radio access point (AP) is arranged, on reception of a request from a terminal (MT) after a temporary interruption of the transmission of the data transmission, to grant or to refuse the interruption, **characterized in that** the radio access point is also arranged to take into consideration in a decision about the granting or rejection of an interruption an anticipated requirement for transmission interruptions that is estimated by subscriber stations associated with it.

## Revendications

1. Procédé d'exploitation d'un système de radiocommunication mobile, dans lequel un terminal (MT) annonce à un point d'accès radio (AP) du système de radiocommunication mobile qui lui est associé aux fins de la transmission de données une interruption souhaitée de la transmission de données pour que le point d'accès radio (AP) n'envoie pas de données au terminal (MT) pendant l'interruption, **caractérisé en ce que** le terminal signale au point d'accès radio un besoin probable estimé d'interruptions de transmissions.

2. Procédé selon la revendication 1, **caractérisé en ce que** le terminal (MT) signale au point d'accès radio (AP) une fréquence probable et/ou une durée probable des interruptions de transmissions.

3. Procédé selon l'une des revendications précédentes, **caractérisé en ce que** le terminal (MT) estime le besoin probable d'interruptions à l'aide d'un ou de plusieurs des critères suivants :
- vitesse de déplacement du terminal ;
- qualité d'un signal radio reçu depuis le point d'accès radio ;
- qualité de service de la transmission de données ;
- puissance d'émission du terminal (MT) et du point d'accès radio (AP).

4. Procédé selon l'une des revendications précédentes, **caractérisé en ce que** le terminal signale le besoin probable estimé d'interruptions de transmissions au point d'accès radio lors de l'association au point d'accès radio.

5. Procédé selon la revendication 4, **caractérisé en ce que** le terminal (MT) poursuit l'estimation du besoin probable après que l'association a été effectuée et, en cas de modification du besoin estimé, signale le besoin modifié au point d'accès radio (AP).

6. Procédé selon la revendication 4 ou 5, **caractérisé en ce que** le point d'accès radio (AP) refuse une demande de liaison du terminal lorsqu'il n'est pas possible de garantir une qualité de service que le terminal (MT) exige pour la liaison en rapport avec le besoin probable d'interruptions de transmissions signalé par le terminal (MT).

7. Procédé selon l'une des revendications 4 ou 5, **caractérisé en ce que**, lorsqu'il n'est pas possible de garantir une qualité de service que le terminal (MT) exige pour une liaison en rapport avec le besoin probable d'interruptions de transmissions signalé par le terminal, le point d'accès radio (AP) communique au terminal (MT) une qualité de service qui peut être garantie.

8. Procédé selon la revendication 7, **caractérisé en ce qu'**il est décidé, au niveau du terminal, s'il faut établir la liaison avec la qualité de service qui peut être garantie ou s'il ne faut pas établir la liaison.

9. Procédé selon l'une des revendications 4 ou 5, **caractérisé en ce que**, lorsqu'il n'est pas possible de garantir une qualité de service que le terminal (MT) exige pour une liaison en rapport avec le besoin probable d'interruptions de transmissions signalé par le terminal (MT), le point d'accès radio (AP) communique au terminal (MT) un volume d'interruptions de transmissions qui peut être garanti.

10. Procédé selon la revendication 9, **caractérisé en ce qu'**il est décidé, au niveau du terminal, s'il faut établir la liaison avec le volume d'interruptions de transmissions qui peut être garanti ou s'il ne faut pas établir la liaison.

11. Procédé selon l'une des revendications précédentes, **caractérisé en ce que** le système de radiocommunication mobile est un système HIPERLAN/2.

12. Terminal (MT) pour un système de radiocommunication mobile, configuré pour interrompre temporairement, dans un état dans lequel il est associé à un point d'accès radio (AP) du système de radiocommunication mobile aux fins de la transmission de données, la transmission depuis/vers le point d'accès radio associé (AP) afin d'effectuer des mesures au niveau des signaux d'autres points d'accès radio, **caractérisé en ce que** le terminal (MT) est en outre configuré pour signaler au point d'accès radio (AP) un besoin probable estimé d'interruptions de transmissions.

13. Point d'accès radio (AP) pour un système de radiocommunication mobile, configuré pour interrompre temporairement la transmission de données depuis/vers un terminal associé (MT) à la réception d'une demande d'interruption du terminal, **caractérisé en ce que** qu'il est en outre configuré pour recevoir du terminal un message relatif à un besoin probable estimé d'interruptions de transmissions et pour accepter ou refuser une liaison vers le terminal en fonction de ce besoin signalé ou pour offrir une liaison avec une qualité de service autre que celle exigée par le terminal.

14. Point d'accès radio (AP) pour un système de radiocommunication mobile, configuré pour accorder ou refuser l'interruption à la réception d'une demande d'un terminal (MT) portant sur une interruption temporaire de la transmission de données, **caractérisé en ce que** qu'il est en outre configuré pour tenir compte, lors d'une décision d'octroi ou de refus d'une interruption, d'un besoin probable d'interruptions de transmissions estimé par des stations d'usagers qui lui sont associées.
